# EUROPÄISCHE PATENTANMELDUNG

(11) **EP 0 545 278 A1**
(43) Veröffentlichungstag der Anmeldung: **09.06.1993**
(21) Anmeldenummer: 92120161.2
(22) Anmeldetag: 26.11.1992
(51) Int. Cl.: C08J 5/18, C08L 3/14, C08L 3/00, B65D 65/46

(54) **Klarsichtteil sowie Verwendung desselben**

(30) Priorität: 29.11.1991 DE 4139468
(71) Anmelder: EMS-INVENTA AG, CH-8001 Zürich (CH)
(72) Erfinder: Meier, Peter, Dr. sc. tech. Dipl.-Chem.ETH, CH-8820 Wädenswil (CH)

(57) **Zusammenfassung**

Die Erfindung betrifft in Wasser zerstörbare oder wasserlösliche und biologisch abbaubare Klarsichtteile, die aus einer amylosehaltigen Formmasse bestehen. Derartige Klarsichtteile bzw. Klarsichtfolien oder Klarsichtfenster werden insbesondere in Briefkuverts, Verpackungsmaterialien mit einer Kartonrückseite und transparenten Klarsichtvorderseiten oder in Verpackungsmaterialien aus Karton mit Klarsichtfenstern eingesetzt, wobei die Klarsichtteile nach Gebrauch der Verpackungen, Kuverts etc. in Wasser zerstört oder aufgelöst werden können und sich problemlos über kommunale Kläranlagen entsorgen lassen.

## Beschreibung

Die Erfindung betrifft den in den Patentansprüchen angegebenen Gegenstand. Die Erfindung betrifft insbesondere Klarsichtteile aus biologisch abbaubaren amylosehaltigen Formmassen, die als Ersatz für Kunststoff-Klarsichtfolien ganz allgemein und insbesondere für Verpackungskörper geeignet sind, wobei diese Klarsichtteile nach Gebrauch der Verpackungen in Wasser zerstört oder aufgelöst und problemlos über kommunale Kläranlagen entsorgt werden können. Anstelle der bisher eingesetzten transparenten Kunststofffolien können somit die erfindungsgemässen Klarsichtteile verwendet werden. Die Erfindung betrifft insbesondere die Verwendung dieser Klarsichtteile in recyclebaren Briefkuverts, Verpackungmaterialien mit einer Kartonrückseite und transparenter Klarsichtvorderseite oder in recyclebaren Verpackungsmaterialien aus Karton mit Klarsichtfenstern, wobei die Klarsichtfenster nach Gebrauch der Verpackungen in Wasser zerstört oder aufgelöst werden können und der Zellstoff/Holzstoff-Anteil einer Altpapieraufbereitungsanlage zugeführt werden kann. Die gelösten Klarsichtfenster lassen sich problemlos über kommunale Kläranlagen entsorgen.

Klarsichtteile für Kartonagen- und Papierprodukte haben seit Jahrzehnten einen festen Platz im Verpackungssektor und haben sich bestens bewährt. Vertreter dieses Verpackungstyps sind z.B. Faltschachteln mit Klarsichtfenstern, Blisterverpackungen, die mit Kartonrücken verklebt sind sowie Briefkuverts, die Klarsichtfenster für die Briefadresse aufweisen.

Als Klarsichtfenster wurden bisher verschiedenste transparente Kunststoff-Folien verwendet, die aus Polyvinylchlorid, Polyestern, Polyethylen, Polypropylen, Polystyrol, Zellglas etc. hergestellt sind. Diese bisher eingesetzten transparenten synthetischen Folien werden in die Karton- und Papierhüllen eingeklebt. Hierfür werden hauptsächlich wasserunlösliche synthetische Klebstoffe, beispielsweise auf Basis von Isocyanaten, verwendet.

Nach Gebrauch der Verpackungsmaterialien lassen sich diese nicht mehr wiederverwenden, da die Folien die Prozessabläufe in den Altpapieraufbereitungsanlagen durch Verstopfen der Siebe stören bzw. diese Prozessabläufe nicht mehr möglich sind. Ein manuelles, vorgeschaltetes Abtrennen der Folien ist viel zu aufwendig, so dass die in Rede stehenden Verpackungen bisher nur durch Verbrennung und Deponierung entsorgt werden können.

Es ist aber absehbar, dass durch die Gesetzgebung in Zukunft nur noch solche Verpackungsmaterialien erlaubt sein werden, welche entweder wiederverwertet oder aber auf eine umweltfreundliche Art entsorgt werden können.

Daher besteht die der Erfindung zugrundeliegende Problemstellung darin, biologisch abbaubare Klarsichtfolien als Ersatz für die bisher verwendeten Kunststoff-Klarsichtfolien zur Verfügung zu stellen, z.B. als Klarsichtteile bzw. Klarsichtfenster, insbesondere für Verpackungskörper, die aus Papier- und Kartonageprodukten bestehen, die die bisher verwendeten Kunststoffteile bzw. Kunststoffenster durch neuartige, in Wasser zerstörbare oder wasserlösliche, biologisch abbaubare Klarsichtteile bzw. Fenster zu ersetzen, welche bei der Wiederaufbereitung der Verpackungen problemlos entfernt bzw. entsorgt werden können. Diese Klarsichtteile sollen in recyclebaren Verpackungsmaterialien wie Briefkuverts und recyclebaren Verpackungen mit Klarsichtvorderseiten etc. verwendet werden.

Dieses Problem wird durch die Merkmale des Anspruchs 1 bzw. 13 und 14 gelöst.

Die Unteransprüche enthalten vorteilhafte Ausgestaltungen der Erfindung.

Die Erfindung beruht auf der Feststellung, dass überraschenderweise, basierend auf amylosehaltige Formmassen wasserlösliche oder in Wasser zerstörbare, biologisch abbaubare Folien hergestellt werden können, welche geeignet sind, als Klarsichtfenster in Kartonagen und Papierverpackungen eingesetzt zu werden. Die aus einer thermoplastischen Formmasse durch Extrusion oder Koextrusion hergestellte Folie bzw. das Klarsichtteil ist zudem auch schrumpf- und tiefziehfähig und kann in Blisterverpackungen eingesetzt werden.

Es ist somit möglich, Filme aus Amylose und/oder hochamylosehaltigen Stärken, die einen Amylosegehalt von mindestens 50 Gew.-%, insbesondere von 65 bis über 95 Gew.-% aufweisen und deren Derivate, auf konventionellen Thermoplastanlagen herzustellen, die als Blasfolien oder Flachfolien ausgebildet sein können. Weiterhin ist es möglich, die amylosehaltigen Formmassen mit Zusätzen von bevorzugt aliphatischen Polyamiden und Copolyamiden zu modifizieren, wobei die Transparenz (Einphasigkeit) der Folien erhalten bleibt. In diesem Fall sind die Folien nicht mehr vollständig in Wasser löslich, sondern nur noch in Wasser zerstörbar, d.h. die Folien werden in einen wasserdispergierbaren Zustand gebracht, in dem der amylosehaltige Anteil in Wasser gelöst und der Polymeranteil in Form von feinsten Partikeln dispergiert vorliegt.

Erfindungsgemäss wird somit eine Klarsichtfolie, z.B. ein Klarsichtteil bzw. ein Klarsicht-Fenster, insbesondere, da hier das Problem der kommunalen Entsorgung besonders brennend ist, für Verpackungskörper bereitgestellt, die aus einer in Wasser zerstörbaren oder wasserlöslichen und biologisch abbaubaren Folie besteht, die aus einer thermoplastischen Formmasse durch Extrusion oder Koextrusion, hergestellt ist.

Die Formmasse besteht mindestens aus einer nicht-modifizierten und/oder mindestens einer modifizierten, bevorzugt chemisch modifizierten Amylose und/oder mindestens einer nichtmodifizierten und/oder mindestens einer modifizierten, bevorzugt chemisch modifizierten Stärke. Die Stärke weist einen Amylosegehalt von mindestens 50 Gew.-%, insbesondere von 65 bis 95 Gew.-% auf. Die chemisch modifizierte Amylose und/oder chemisch modifizierte Stärke besitzt einen Substitutionsgrad von 0,01 bis 0,5, bevorzugt 0,03 bis 0,3 und enthält in einer speziellen Ausführungsform Substituenten aus der Gruppe: 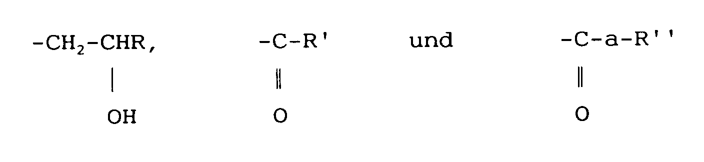
worin
- R: ein H-Atom oder ein Alkylrest mit 1 bis 18 C-Atomen
- R': ein Alkylrest mit 1 bis 18 C-Atomen
- R'': eine OH-, OR- oder Polyethergruppe und
- a: eine Methylen-, Ethylen- oder Isopropylenrest ist.

Die Formmasse kann in einer weiteren Ausführungsform Additive enthalten, die ausgewählt sind aus der Gruppe, die aus Weichmachern, Harnstoff, Harnstoffderivaten, Emulgatoren, Gleit- und Trennmittel besteht. Die Emulgatoren haben einen Hydrophil-Lipophil-Balance-Wert (HLB-Wert) von 0 bis 20, wie z.B. Stearate, Polyoxyethylen-20-Sorbitanmonolaurat oder Polyethylen(20)-Sorbitanmonopalmitat.

In einer anderen Ausführungsform besteht das erfindungsgemässe Klarsichtteil aus einer in Wasser zerstörbaren, biologisch abbaubaren Folie aus einer Formmasse, welche eine Mischung aus mindestens einer nicht-modifizierten und/oder mindestens einer modifizierten, bevorzugt chemisch modifizierten Stärke und/oder mindestens einer nicht-modifizierten und/oder mindestens einer modifizierten, bevorzugt chemisch modifizierten Amylose und mindestens einem ausgewählten, bevorzugt aliphatischen Polymeren mit einem Schmelz- oder Erweichungspunkt von 50 bis 200°C, bevorzugt 60 bis 180°C, ist. Der Anteil des(r) Polymeren, welche(s) bevorzugt aus der Gruppe der Polyester, Copolyester, Polyamide, Copolyamide, Polyolefine, Copolyolefine, Polyvinylalkohol, Ethylenoxidcopolymere, Propylenoxidcopolymere, Vinylalkoholcopolymere, Pullulan und Gelatine ausgewählt wird (werden), beträgt hierbei, bezogen auf die Gesamtmischung 0,1 bis 90 Gew.-Teile, bevorzugt 20 bis 60 Gew.-Teile, besonders bevorzugt 20 bis 40 Gew.-Teile.

Die erfindungsgemässen Klarsichtfenster können mittels der entsprechenden Anlagen für Kunststoffenster in die Verpackungen bzw. Kuverts eingesetzt werden, wobei das Einkleben der Fenster vorteilhafterweise mit Wasser, Stärkeleim oder anderen wasserlöslichen Klebstoffen vorgenommen wird.

Für die Wiederaufbereitung der Kartonagen/Papierverpackungen mit den erfindungsgemässen Klarsichtfenstern können diese problemlos in Altpapieraufbereitungsanlagen wieder verarbeitet werden. Die gebrauchten Verpackungen werden dazu in einer Häckselanlage, z.B. einer Schneidmühle zerkleinert und zweckmässigerweise über Nacht in Wasser, das einen alkalischen pH-Wert, insbesondere von 8 bis 10,5, besonders bevorzugt 9,0 bis 10,0 aufweist, eingeweicht. Eine Erhöhung der Wassertemperatur auf 60 bis 80°C beschleunigt und verkürzt den Lösevorgang für die Klarsichtfolien weiter. Gegebenenfalls kann in einem weiteren Schritt, die Schnitzel aus den Kartonagen und erfindungsgemässen Klarsichtfenstern unter energieintensivem Rühren, bevorzugt in einem Pulper oder Fiberizer, in Wasser aufgeschlämmt und während 10 bis 30 Minuten intensiv behandelt werden, wobei sich die Klarsichtfenster auflösen.

Wenn die Klarsichtfenster aus einer Amylose- und/oder Stärke-Polymer-Mischung bestehen, ist es vorteilhaft, zwischen dem ersten und dem weiteren Schritt noch einen Zwischenschritt einzulegen, in dem die Schnitzel aus den Kartonagen bzw. Verpackungen mit Enzymen behandelt werden. Geeignet ist hierzu zum Beispiel Bactosol MTN der Firma Sandoz sowie zusätzlich ein Netzmittel beispielsweise Sandopan LFW der Firma Sandoz.

Nach diesen Aufbereitungsschritten werden die Pulpfasern von dem amylose- und/oder stärkehaltigen Wasser durch Siebung abgetrennt, wobei das Abwasser biologisch über eine Kläranlage entsorgt werden kann und die verbleibenden Fasern zur Wiederverwendung einer Papierfabrikation zugeführt werden können.

Die Erfindung wird nun durch die folgenden Beispiele näher erläutert.

### I. Herstellung der amylosehaltigen Formmassen

### Stärkeformmasse I:

### Beispiel 1a)

Nach dem im folgenden beschriebenen Verfahren wurde aus 70 Gew.-Teilen Hydroxypropylmaisstärke mit einem Substitutionsgrad von 0,06 und einem Amylosegehalt von 50 Gew.-% sowie 15 Gew.-Teilen Glycerol, 12,8 Gew.-Teilen Sorbitol, 2 Gew.-Teilen Harnstoff und 0,2 Gew.-Teilen Magnesiumstearat eine Stärkeformmasse hergestellt, die anschliessend granuliert wurde.

Extrudereinstelldaten:
- a) Heizzonen:: (1) Raumtemperatur (2) 130°C (3) 130°C (4) 100°C (5) 100°C (6) 150°C
- b) Druck:: Zone (6) (30-40 bar) 3 x 10⁶ - 4 x 10⁶ Pa
- c) Drehmoment:: 70 %
- d) Unterdruck:: (-0,4 bar) -4 x 10⁴ Pa.

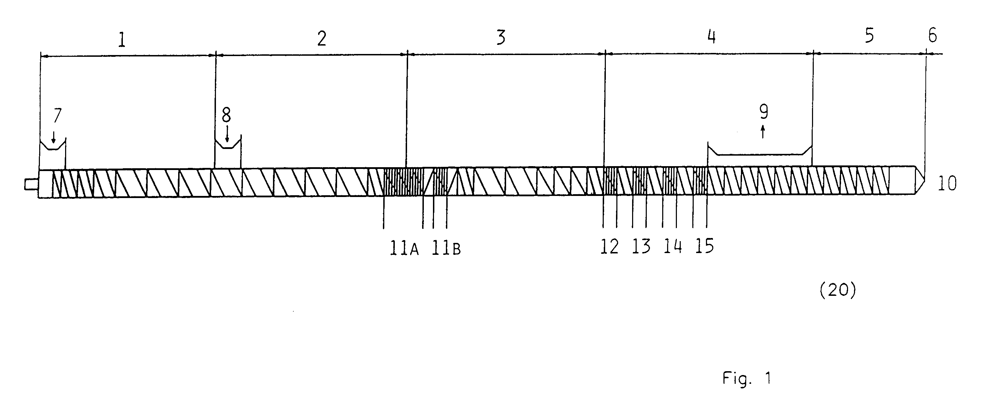

In den Einzugsbereich (Heizzone 1) eines gleichlaufenden, dichtkämmenden Doppelwellenextruders mit einer Schneckengeometrie gemäss Fig. 1 und einem Schneckenlängen-Durchmesserverhältnis von 41 wurden 70 Gew.-Teile Hydroxypropyl-Maisstärke mit einem Substitutionsgrad von 0,06 und einem Amylosegehalt von 50 Gew.-% und 12,8 Gew.-% Sorbitol an der Stelle 7 von Fig. 1 separat eindosiert, im Extruder gleichzeitig vermischt und gefördert. 0,2 Gew.-% Magnesiumstearat wurden mit 2 Gew.-% Harnstoff bei 60°C in 15 Gew.-% Glycerol gelöst. Diese vorhomogenisierte Weichmacher-Emulgator-Additiv-Mischung wurde an der Stelle 8 von Fig. 1 in den Extruder (Heizzone 2) eindosiert, dann im Extruder gleichzeitig vermischt und weitergefördert. Nach dem Aufschliessen der Stärkekörner und vollständigem Plastifizieren der Stärkemischung in der Knetkammer 11 (Heizzone 2 und 3) zu einer homogenen Schmelze, wurde die Stärkeschmelze durch Anlegen eines Unterdrucks an der Stelle 9 von Fig. 1 (Heizzone 4) entgast. Nach Durchlaufen der Heizzone (5) wurde die homogene, thermoplastisch verarbeitbare Stärkeschmelze in Heizzone (6) durch eine Düse als Strang mit geringer Strangaufweitung (Düse: 3 mm, Strang: 4 mm) extrudiert, abgekühlt und granuliert.

### Beispiel 1b)

Wie Beispiel 1a), aber mit einem Harnstoffanteil von 1 Gew.-Teil sowie einem Sorbitolanteil von 13,8 Gew.-Teilen.

### Stärkeformmasse II:

70 Gew.-Teile der Stärkeformmasse I aus Beispiel 1a) oder 1b) wurden mit 30 Gew.-Teilen eines ausgewählten Copolyamids, Copolyamid 6/6.9 (Grilon CF 62 BSE) der Firma EmsChemie AG, gemischt und in die Dosierzone eines Doppelwellenextruders ZSK-30 (Firma Werner Pfleiderer) mit 6 Heizzonen eindosiert. Die Drehzahl und der Durchsatz betrugen 100 Umdrehungen ⁻¹ bzw. 8 bis 10 kg/Stunde.

### II: Klarsichtfolien

Auf einer dem Stand der Technik entsprechenden Anlage für die Blas- und Flachfolienherstellung wurden Folien aus der Stärkeformmasse I oder II hergestellt. Diese Folien wurden zu Klarsichtfenstern weiterverarbeitet, d.h. auf die entsprechende Grösse zugeschnitten und dann mittels der entsprechenden Anlagen für Kunststoff-Fenster in Kuverts oder Verpackungen eingesetzt, wobei das Einkleben mittels Wasser oder Stärkeleim oder eines anderen wasserlöslichen Klebers erfolgte.

### III. Verfahren zum Entsorgen der erfindungsgemässen Klar sichtfolien, die in Verpackungen eingesetzt sind

### Beispiel 2:

Wiederaufbereitung gemischter Verpackungsabfälle für Werkzeuge, Schrauben und Nägel, bestehend aus Kartonrückseite und transparenter, thermoverformter Klarsichtvorderseite: Als Folienblister wurde eine Flachfolie, die aus einem Granulat folgender Zusammensetzung hergestellt wurde, verwendet:
70 % propoxylierte Hochamylose-Maisstärke mit einem Amylosegehalt von 85 % und einem Propoxylierungsgrad von 0,12
15 % Glycerol
13 % Sorbitol
2 % Harnstoff.

5 kg der Verpackungsabfälle wurden über Nacht in 200 l Wasser (ca. pH 10, Kalkhydrat) eingeweicht. Anschliessend wurde die gesamte Aufschlämmung in einem Pulper während 20 Minuten gepulpt. Nach der Entwässerung mittels einer Siebpresse konnten die resultierenden Fasern direkt wieder einer Kartonageproduktion zugeführt werden.

### Beispiel 3:

In diesem Beispiel wird die Wiederaufbereitung von Verpackungsmaterialien für sanitäre Armaturen, hergestellt aus Kartonagen und Klarsichtfenstern, bestehend aus transparenten, kaltwasserresistenten Polyamid-Stärke-Folien gezeigt:

Als Klarsichtfolie wurde eine Blasfolie, die aus einem Granulat folgender Zusammensetzung hergestellt wurde, verwendet:
40 % Copolyamid 6/6.9 (Grilon XE 3222 der Ems-Chemie)
60 % Stärkeformmasse gemäss Zusammensetzung aus Beispiel 2.

20 kg Verpackungsabfälle wurden in einer Häckselanlage in Stücke von ca. 2 bis 5 cm Länge vorzerkleinert und in einen 500 l Rührkessel gebracht. Anschliessend wurden 300 l Wasser (pH 6 bis 7) zugegeben und während 60 Minuten unter leichtem Rühren bei 70°C einer Enzymbehandlung unterworfen. Für die Enzymbehandlung wurden in die Flotte folgende Zusätze gebracht:
Sandopan LFW 2 ml/l (Netzmittel, Firma Sandoz)
Bactosol MTN 3 ml/l (Enzym, Firma Sandoz).

Nach dieser Vorbehandlung wurde die Aufschlämmung der Verpackungsmaterialien in einen Fiberizer transferiert und während 10 Minuten behandelt. Anschliessend wurden die Fasern über ein Filtersieb entwässert und der Kartonagenproduktion zugeführt.

## Patentansprüche

1. Klarsichtteil, insbesondere für Verpackungskörper, dadurch gekennzeichnet, dass es aus einer wasserlöslichen oder Wasserzerstörbaren und biologisch abbaubaren Folie aus einer thermoplastisch verarbeitbaren, amylosehaltigen Formmasse besteht.

2. Klarsichtteil gemäss Anspruch 1, dadurch gekennzeichnet, dass die Folie durch Extrusion oder Koextrusion, hergestellt ist.

3. Klarsichtteil gemäss den Ansprüchen 1 und 2, dadurch gekennzeichnet, dass die Formmasse mindestens eine nicht-modifizierte und/oder mindestens eine modifizierte, bevorzugt chemisch modifizierte Amylose und/oder mindestens eine nicht-modifizierte und/oder mindestens eine modifizierte, bevorzugt chemisch modifizierte Stärke, enthält.

4. Klarsichtteil gemäss Anspruch 3, dadurch gekennzeichnet, dass die Stärke einen Amylosegehalt von mindestens 50 Gew.-%, insbesondere 65 bis 95 Gew.-%, besitzt.

5. Klarsichtteil gemäss den Ansprüchen 3 und 4, dadurch gekennzeichnet, dass die chemisch modifizierte Amylose und/oder chemisch modifizierte Stärke Substituenten, ausgewählt aus der Gruppe: 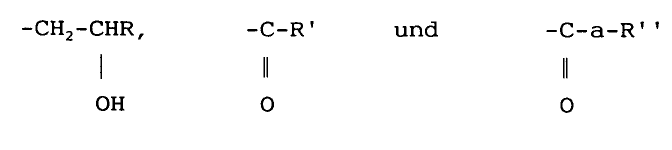 enthält, worin
R ein H-Atom oder ein Alkylrest mit 1 bis 18 C-Atomen
R' ein Alkylrest mit 1 bis 18 C-Atomen,
R'' eine OH-, OR- oder Polyethergruppe und
a eine Methylen-, Ethylen- oder Isopropylengruppe ist.

6. Klarsichtteil gemäss den Ansprüchen 3 bis 5, dadurch gekennzeichnet, dass die chemisch modifizierte Amylose und/oder chemisch modifizierte Stärke einen Substitutionsgrad von 0,01 bis 0,5, bevorzugt 0,03 bis 0,3, besitzt.

7. Klarsichtteil gemäss den Ansprüchen 2 bis 6, dadurch gekennzeichnet, dass die Formmasse Additive enthält, die ausgewählt sind aus der Gruppe, die aus Weichmachern, Harnstoff, Harnstoffderivaten, Emulgatoren, Gleit- und Trennmittel, besteht.

8. Klarsichtteil gemäss einem der Ansprüche 1 bis 7, dadurch gekennzeichnet, dass die Formmasse eine Mischung aus mindestens einer nicht-modifizierten und/oder mindestens einer modifizierten, bevorzugt chemisch modifizierten Stärke und/oder mindestens einer nicht-modifizierten und/oder mindestens einer modifizierten, bevorzugt chemisch modifizierten Amylose und mindestens einem ausgewählten, bevorzugt aliphatischen Polymeren mit einem Schmelz- oder Erweichungspunkt von 50 bis 200°C, bevorzugt 60 bis 180°C, ist.

9. Klarsichtteil gemäss Anspruch 8, dadurch gekennzeichnet, dass das Polymere aus der Gruppe ausgewählt ist, die aus Polyestern, Copolyestern, Polyvinylalkoholen, Ethylenoxidcopolymeren, Propylenoxidcopolymeren, Vinylalkoholcopolymeren, Pullulan und Gelatine besteht.

10. Klarsichtteil gemäss den Ansprüchen 8 und 9, dadurch gekennzeichnet, dass der Polymeranteil 0,1 bis 90 Gew.-Teile, bevorzugt 20 bis 60 Gew.-Teile, besonders bevorzugt 20 bis 40 Gew.-Teile bezogen auf die Gesamtmischung, beträgt.

11. Klarsichtteil gemäss einem der Ansprüche 1 bis 10, dadurch gekennzeichnet, dass die Folie einer weiteren Formgebung, bevorzugt Tiefziehen oder Schrumpfen, unterworfen wurde.

12. Klarsichtteil gemäss einem der Ansprüche 1 bis 11, dadurch gekennzeichnet, dass die Folie in Form eines Klarsichtteils konfektioniert ist.

13. Verwendung des Klarsichtteils gemäss einem der Ansprüche 1 bis 11 als Ersatz für Kunststoff-Klarsichtfolien.

14. Verwendung des konfektionierten Klarsichtteils gemäss Anspruch 12 als Klarsichtteil in recyclebaren Briefkuverts, Verpackungsmaterialien mit einer Kartonrückseite und transparenter Klarsichtvorderseite oder recyclebaren Verpackungsmaterialien aus Karton mit Klarsichtfenster.
